# EUROPEAN PATENT APPLICATION

(11) **EP 1 717 805 A1**
(43) Date of publication of application: **02.11.2006**
(21) Application number: 05710014.1
(22) Date of filing: 09.02.2005
(51) Int. Cl.: G11B 20/12, G11B 20/10, G11B 20/18

(54) **DEFECT MANAGEMENT INFORMATION SETTING METHOD, RECORDING METHOD, DEFECT MANAGEMENT METHOD, PROGRAM, RECORDING MEDIUM, AND INFORMATION RECORDING DEVICE**

(30) Priority: 19.02.2004 JP 2004042646; 06.04.2004 JP 2004111699
(71) Applicant: Ricoh Company, Ltd., Tokyo 143-8555 (JP)
(72) Inventor: SASAKI, Yoshiyuki, Tokyo 195-0053 (JP)
(74) Representative: Mounteney, Simon James
(86) International application number: PCT/JP2005/001962
(87) International publication number: WO 2005/081247

(57) **Abstract**

An information recording apparatus divides a data area into a plurality of partial areas (UDA1, UDA2) (step 303), and sets defect management information including a defect management scheme for each partial area (step 305). Then, UDA1 is set to be an area where defect management is not performed and UDA2 is set to be an area where defect management is performed so that continuity of data is maintained for information recorded on the UDA1 and reliability of data is maintained for information recorded on the UDA2. Thus, it becomes possible to properly record a plurality of pieces of data whose usage and characteristics are different each other on a same information recording medium.

## Description

### TECHNICAL FIELD

The present invention relates to a defect management information setting method, a recording method, a defect management method, a program and a recording medium, and an information recording apparatus. More particularly, the present invention relates to the defect management information setting method for setting defect management information for managing a defect area in a data area in an information recording medium, the recording method for recording data on the data area of the information recording medium, the defect management method for managing the defect area based on the defect management information, the program used in the information recording apparatus and the recording medium recording the program, and the information recording apparatus for recording data on the information recording medium.

### BACKGROUND ART

Personal computers has become widely used for document creation, table calculation, and data management using database and the like along with improvement of capability and price-reduction. Then, an optical disc such as a DVD (digital versatile disc) has become attracting attention as an information recording medium for recording data created by the personal computer, and data used for the personal computer and the like (to be also referred to as PC data), so that optical disc apparatuses have become popularized as an information recording apparatus for recording information on an optical disc.

As the DVD, there are a type such as DVD-R and DVD+R in which writing is available only once, a rewritable type such as DVD-RAM, DVD-RW and DVD+RW, and a playback-only type such as DVD-ROM. Then, data recording and reproduction are performed in accordance with each predetermined standard.

In the rewritable information recording medium of these information recording mediums, conventionally, defect management is applied as a means for ensuring readability of recorded data. In this defect management, a list in which defects in the recording medium are associated with areas used in replacement of the defects is stored in a predetermined replacement area on the information recording medium, so that the list is referred to when recording and reproducing information to avoid using the defects.

In addition, with the rise of digital technology and the improvement of data compression technology, data (to be referred to as AV data) such as music and video is becoming recorded on DVDs. Generally, it is not necessary that AV data has reliability the same as that of PC data as long as reproduced music or video is sensuously acceptable. Instead of that, it is more important that recording is not interrupted. Therefore, for recording AV data, management of the defect area in the recording area is not performed.

As mentioned above, since the characteristics required for data recording are different between the PC data and the AV data, the PC data and the AV data are respectively recorded on different mediums (refer to patent document 1, for example).

By the way, there may be a case where the AV data and the PC data are mixed and are recorded on a disc (refer to patent document 2, for example). For example, when the disc on which the AV data and the PC data are recorded together is set in a reproducing environment (a DVD player, for example) where the video data can be reproduced, the video data can be reproduced. When the disc is set in an optical disc apparatus connected to a personal computer, both of the video data and the PC data can be reproduced.

However, the defect management in the recording area is not performed when the AV data is recorded. Thus, even when there is a defect in an area on which the PC data is recorded, for example, since the PC data is recorded on the area as it is, there is a risk that reliability of the PC data is lowered.

Patent document 1: Japanese Laid-Open Patent Application No. 2000-48491

Patent document 2: Japanese Laid-Open Patent Application No. 2000-32378

### DISCLOSURE OF THE INVENTION

### PROBLEM TO BE SOLVED BY THE INVENTION

The present invention is contrived under the circumstances, and an object of the present invention is to provide a technology for enabling properly recording a plurality of kinds of data whose usage and characteristics are different each other on a same information recording medium.

### MEANS FOR SOLVING THE PROBLEM

The present invention is a defect management information setting method for setting defect management information for managing a defect area in a data area of an information recording medium, including:
a step of dividing the data area into a plurality of partial areas such that logical addresses continue and setting defect management information for each partial area.

According to the present invention, proper defect management can be performed for each partial area based on the set defect management information. Therefore, as a result, it becomes possible to property record a plurality of kinds of data whose usage and characteristics are different each other on the same information recording medium.

In the above configuration, the defect management information may include information on determination criteria for detecting a defect area, and the determination criteria is independently set for each of at least two areas in the plurality of partial areas.

In addition, the plurality of partial areas may include a partial area where defect management is not performed. The information recording medium may be a disc-like medium, and the partial area where the defect management is not performed is provided in an inner periphery side of a partial area where defect management is performed. In addition, the defect management information may include information on a replacement area of the defect area, and the replacement area may be set for each partial area. In addition, the defect management information may include information on a replacement area of the defect area, and the replacement area may be set for each of partial areas of the plurality of partial areas excluding a partial area where the defect management is not performed.

In the above-mentioned configuration, the replacement area may be provided between two partial area, and the logical addresses continue between a partial area right before the replacement area and a partial area right after the replacement area. In at least one partial area of the plurality of partial areas, a corresponding replacement area may be provided adjacent to the at least one of the partial area. In addition, in at least one partial area of the plurality of partial areas, corresponding replacement areas may be provided in the at least one partial area in a distributed manner.

In the above-mentioned configuration, the step of setting the defect management information may be performed when initializing the information recording medium, and a method for dividing the data area and a defect management scheme for each partial area may be set by a user.

The defect management information setting method may further includes a step of recording the defect management information on a predetermined area of the information recording medium, and the defect management information may include an identifier for identifying a data structure of the defect management information.

In addition, the present invention is a recording method for recording data on a data area of an information recording medium, including:
a step of determining, based on the defect management information set by the defect management information setting method, whether an identifier included in the defect management information corresponding to a partial area to which an area where the data is to be recorded belongs is known; and
a step of permitting data recording when the identifier is known as a result of the determination.

According to the present invention, since data recording is allowed when the identifier included in the defect management information corresponding to a partial area to which an area where the data is to be recorded belongs is known, defect management can be properly performed based on the defect management information. Therefore, as a result, it becomes possible to property record a plurality of kinds of data whose usage and characteristics are different each other on the same information recording medium.

In addition, the present invention is a defect management method for managing a defect area in a data area of an information recording medium, including:
performing defect management of a recording area where data is recorded based on information on the recording area and defect management information that is set by the defect management information setting method.

According to the present invention, defect management can be properly performed for the recording area based on the information on the recording area on which data is recorded and the defect management information set by the defect management information setting method of the present invention. Therefore, as a result, it becomes possible to property record a plurality of kinds of data whose usage and characteristics are different each other on the same information recording medium.

In addition, the present invention is a program used in an information recording apparatus for recording data on an information recording medium, the program causing a control computer for the information recording medium to execute:
a step of dividing a data area into a plurality of partial areas such that logical addresses continue and setting defect management information for each partial area.

According to the present invention, the program of the present invention is loaded onto a predetermined memory, and when the head address is set in the program counter, the control computer of the information recording apparatus divides a data area into a plurality of partial areas such that logical addresses continue and sets defect management information for each partial area. Thus, the program of the present invention can cause a control computer of the optical disc apparatus to performed the defect management information setting method of the present invention, so that it becomes possible to property record a plurality of kinds of data whose usage and characteristics are different each other on the same information recording medium.

The program may further causes the control computer to execute a step of recording the defect management information on a predetermined area of the information recording medium. In addition, the defect management information may include an identifier for identifying a data structure of the defect management information, and the program may further cause the control computer to execute:
a step of determining, based on the defect management information set by the step of setting, whether the identifier corresponding to a partial area to which an area where the data is to be recorded belongs is known; and
a step of permitting data recording when the identifier is known as a result of the determination.

In addition, the program may further causes the control computer to execute:
a step of performing defect management of a recording area where data is recorded based on defect management information that is set by the step of setting and information on the recording area.

The present invention may be also configured as computer readable recording medium recording the program.

According to the present invention, by causing the computer to execute the recorded program of the present invention, it becomes possible to property record a plurality of kinds of data whose usage and characteristics are different each other on the same information recording medium.

In addition, the present invention can be also configured as an information recording apparatus for recording data on an information recording medium, including:
setting means for dividing a data area of the information recording medium into a plurality of partial areas such that logical addresses continue and setting defect management information for each partial area;
recording means for recording data on the data area; and
defect management means for performing defect management for a recording area where the data is recorded based on information on the recording area and the defect management information.

According to the present invention, the setting means divides a data area of the information recording medium into a plurality of partial areas such that logical addresses continue and sets defect management information for each partial area. Then, when the recording means records data on the data area, the defect management means performs defect management properly for a recording area where the data is recorded based on information on the recording area and the defect management information. Therefore, as a result, it becomes possible to property record a plurality of kinds of data whose usage and characteristics are different each other on the same information recording medium.

In the information recording apparatus, the defect management information may include information on determination criteria for detecting a defect area, and the setting means may set the determination criteria independently for each of at least two areas in the plurality of partial areas. In addition, the plurality of partial areas may include a partial area where defect management is not performed.

The information recording medium may be a disc-like medium, and the partial area where the defect management is not performed may be provided in an inner periphery side of a partial area where defect management is performed.

In addition, in the information recording apparatus, the defect management information may include information on a replacement area of the defect area, and the setting means may set the replacement area for each partial area. In addition, the defect management information may include information on a replacement area of the defect area, and the setting means may set the replacement area for each of partial areas of the plurality of partial areas excluding a partial area where the defect management is not performed.

In addition, the replacement area may be provided between two partial area, and the logical addresses may continue between a partial area right before the replacement area and a partial area right after the replacement area, and in at least one partial area of the plurality of partial areas, a corresponding replacement area may be provided adjacent to the at least one of the partial area.

In addition, in at least one partial area of the plurality of partial areas, corresponding replacement areas may be provided in the at least one partial area in a distributed manner.

In the information recording apparatus, the setting means may set the defect management information when initializing the information recording medium. In addition, a method for dividing the data area and a defect management scheme for each partial area can be set by a user. Further the recording means may record the defect management information on a predetermined area of the information recording medium, and the defect management information may include an identifier for identifying a data structure of the defect management information. In this case, the recording means may record the data when an identifier included in the defect management information corresponding to a partial area to which an area where the data is to be recorded belongs is known.

### EFFECT OF THE INVENTION

According to the present invention, a technology to enable recording a plurality of kinds of data whose usage and characteristics are different each other on the same information recording medium can be provided.

### BRIEF DESCRIPTION OF THE DRAWINGS

Fig.1 is a block diagram showing a configuration of an optical disc apparatus of the first embodiment of the present invention;
Fig.2 is a figure for explaining a layout when recording AV data and PC data together in a same disc;
Fig.3 is a figure for explaining a layout of a recording area in a conventional defect management scheme;
Fig.4 is a figure for explaining a layout of a recording area in the first embodiment;
Fig.5 is a figure for explaining a DMI block in Fig.4;
Fig.6 is a flowchart for explaining format process in the first embodiment;
Fig.7 is a figure for explaining recording process in the first embodiment;
Fig.8 is a figure for explaining a modified example of the layout of the recording area in Fig.4;
Fig.9 is a figure for explaining a DMI block in Fig.8;
Fig.10 is a figure for explaining a RPL block in Fig.9;
Fig.11 is a figure for explaining a layout of a recording area in the second embodiment;
Fig.12 is a figure for explaining a DMI block in Fig.11;
Fig.13 is a figure for explaining a RPL block in Fig.12;
Fig.14 is a figure for explaining recording process in the second embodiment.

### Description of reference signs

15 ... optical disc (information recording medium), 20 ... optical disc apparatus, 23 ... optical pickup apparatus (a part of recording means), 24 ... laser control circuit (a part of recording means), 25 ... encoder (a part of recording means), 39 ... flash memory (recording medium), 40 ... CPU (a part of setting means, defect management means, and recording means)

### BEST MODE FOR CARRYING OUT THE INVENTION

### (First embodiment)

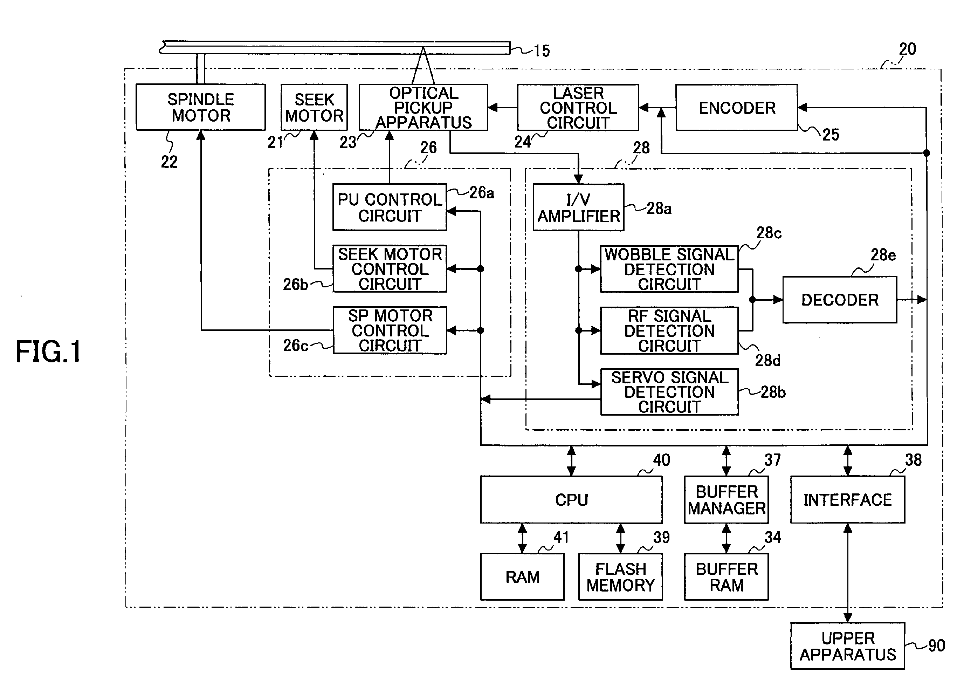

In the following, the first embodiment of the present invention is described with reference to Figs.1-7. Fig.1 shows a schematic configuration of an optical disc apparatus 20 as an information recording apparatus of the first embodiment of the present invention.

The optical disc apparatus 20 shown in Fig.1 includes a spindle motor 22 for rotating the optical disc 15 as an information recording medium, an optical pickup apparatus 23, a seek motor 21 for driving the optical pickup apparatus 23 in the sledge direction, a laser control circuit 24, an encoder 25, a servo control circuit 26, a reproduced signal processing circuit 28, a buffer RAM 34, a buffer manager 37, an interface 38, a flash memory 39, a CPU 40 and a RAM 41 and the like. By the way, the arrows shown in Fig.1 indicate representative signals and flows of information, and do not show all connection relationships among each block. In addition, in the first embodiment, it is assumed that the DVD+RW is used as the optical disc 15 as an example.

The optical pickup apparatus 23 is an apparatus for irradiating a recording surface of the optical disc 15 on which spiral or concentric tracks are formed with a laser light, and for receiving a reflecting light from the recording surface. This optical pickup apparatus 23 includes an optical system, having a semiconductor laser as a light source and an objective lens, for guiding a light flux emitted from the semiconductor laser to the recording surface of the optical disc 15 and guiding a returned light flux reflected on the recording surface to a predetermined light-receiving position, and includes a light-receiver that is placed at the light receiving position for receiving the returned light flux, and includes a driving system (focusing actuator and tracking actuator) (not shown in the figure). The light-receiver outputs a signal according to the received light amount to the reproduced signal processing circuit 28.

The reproduced signal processing circuit 28 includes an I/V amplifier 28a, a servo signal detection circuit 28b, a wobble signal detection circuit 28c, an RF signal detection circuit 28d, and a decoder 28e and the like.

The I/V amplifier 28a converts the output signal of the light-receiver of the optical pickup apparatus 23 into a voltage signal, and amplifiers the signal with a predetermined gain.

The servo signal detection circuit 28b detects a servo signal such as a focus error signal and a track error signal based on the output signal of the I/V amplifier 28a. The servo signal detected here is output to the servo control circuit 26.

The wobble signal detection circuit 28c detects the wobble signal based on the output signal of the I/V amplifier 28a. The RF signal detection circuit 28d detects an RF signal based on the output signal of the I/V amplifier 28a. The decoder 28e extracts address information and a synchronization signal and the like from the wobble signal. The extracted address information is output to the CPU 40, and the synchronization signal is output to the encoder 25. In addition, the decoder 28e performs decoding processing and error detection processing and the like for the RF signal, and after performing error correction processing when an error is detected, the decoder 28e stores reproduced data into the buffer RAM 34 via the buffer manager 37.

The servo control circuit 26 includes a PU control circuit 26a, a seek motor control circuit 26b, and a SP motor control circuit 26c.

The PU control circuit 26a generates a driving signal of the focusing actuator based on the focus error signal for correcting focus deviation of the objective lens forming the optical pickup apparatus 23. In addition, the PU control circuit 26a generates a driving signal of the tracking actuator based on the track error signal for correcting track deviation of the objective lens. Each of the generated driving signals is output to the optical pickup apparatus 23. Accordingly, tracking control and focus control are performed.

The seek motor control circuit 26b generates a driving signal for driving the seek motor 21 based on the instruction of the CPU 40. The generated driving signal is output to the seek motor 21.

The SP motor control circuit 26c generates a driving signal for driving the spindle motor 22 based on an instruction of the CPU 40. The generated driving signal is output to the spindle motor 22.

Data (recording data) to be recorded on the optical disc 15 and data (reproduced data) reproduced from the optical disc 15 are temporarily stored in the buffer RAM 34. Input and output of data for the buffer RAM 34 are managed by the buffer manager 37.

The encoder 25 extracts the recording data stored in the buffer RAM 34 based on the instruction of the CPU 40 via the buffer manager 37, performs modulation of data and adds error correction code and the like, so as to generate a signal to be written to the optical disc 15. The writing signal generated here is output to the laser control circuit 24.

The laser control circuit 24 controls power of the laser light emitted from the semiconductor laser that forms the optical pickup apparatus 23. For example, when recording, the laser control circuit 24 generates a driving signal of the semiconductor laser based on the writing signal, recording condition, and light emitting characteristics of the semiconductor laser.

The interface 38 is a bi-directional communication interface to an upper apparatus 90 (personal computer, for example), and conforms to a standard interface such as ATAPI (AT Attachment Packet Interface), SCSI(Small Computer System Interface) and USB(Universal Serial Bus).

The flash memory 39 includes a program area and a data area. In the program area of the flash memory 39, programs including a program of the present invention described by code that is readable by the CPU 40 are stored. In the data area of the flash memory 39, the recording condition and the light emitting characteristics of the semiconductor laser are stored.

The CPU 40 controls operation of each of the above-mentioned units according to the program stored in the program area of the flash memory 39, and stores data necessary for control into the RAM 41 and the buffer RAM 34.

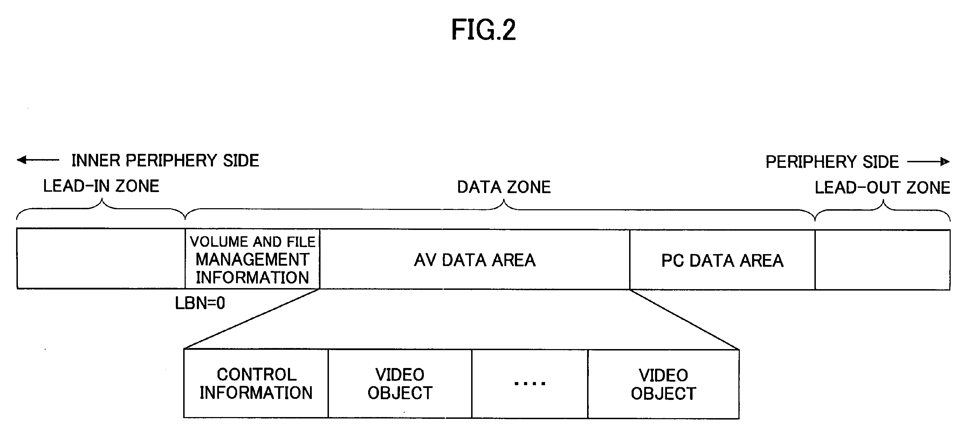

Fig.2 shows an example for recording the AV data and the PC data on the same disc. As shown in this figure, the recording area is divided into three zones (Lead-in Zone, Data Zone and Lead-out Zone) from the inner periphery side to the periphery side. The data area is divided into an area in which file management information is stored, an AV data area in which image data is stored, and a PC data area in which data other than the AV data is stored. The AV data area includes an area in which control information on video data is stored and an area in which video data (Video Object) is stored.

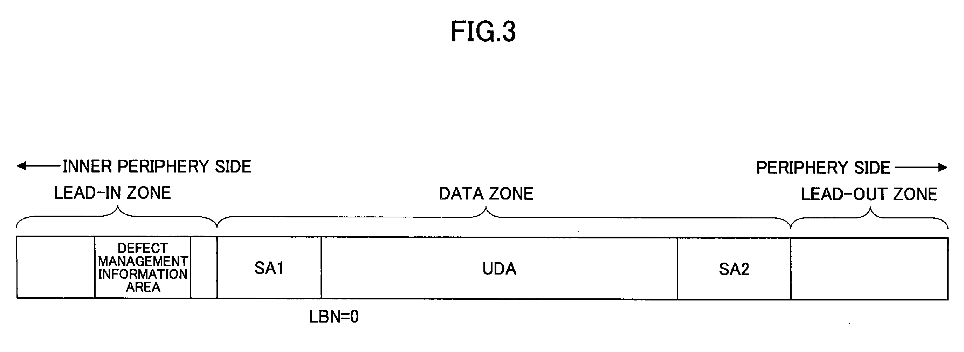

With respect to a layout of the recording area in a conventional defect management scheme, a main part on defect management is described with reference to Fig.3. In this conventional technology, as shown in Fig.3 as an example, the recording area is divided into the lead-in zone, the data zone and the lead-out zone from the inner periphery side to the periphery side. A defect management information area in which defect management information and the like is recorded exists in the lead-in zone. Recording and reproduction for data are performed for the data zone. Absolute addresses called physical addresses are assigned to all sectors in the data zone. The data zone is divided into a replacement area 1 (to be referred to as "SA1" hereinafter), a user data area (to be referred to as "UDA" hereinafter), and a replacement area 2 (to be referred to as "SA2" hereinafter). The UDA is an area provided for storing user data. A logical address is assigned to each sector in the UDA, so that a user accesses the optical disc using the logical address to perform recording and reproducing of the data.

Next, a scheme for replacing the defect area in the defect management is described simply. As the replacement of the defect area in the defect management, two kinds of replacement that are slip replacement and linear replacement are generally used.

In the slip replacement, when the defect area is detected, an area following the defect area is used in place of the defect area. Thus, when slip replacement occurs, a logical address associated with data is slipped by one with respect to the physical address indicating the position of the area.

In linear replacement, when a defect area is detected, a replacement area that is prepared beforehand at a position physically separated from the defect area is used. In the linear replacement, since the replacement destination is physically separated from the defect area, there may be a case where it takes more time to access the disc compared with the slip replacement.

For example, in the DVD-RAM, slip replacement is applied for a defect (initial defect or primary defect) detected in the initialization process (formatting) of the disc, and the linear replacement is applied for a defect (secondary defect) detected when recording user data after the initialization process. That is, in the DVD-RAM, slip replacement is used in combination with linear replacement. Then, defect information of the initial defect is registered in a primary defect list (PDL), and defect information of the secondary defect is registered in the secondary defect list (SDL).

As to a DVD+RW, only the linear replacement is applied, so that one kind of a defect list exists.

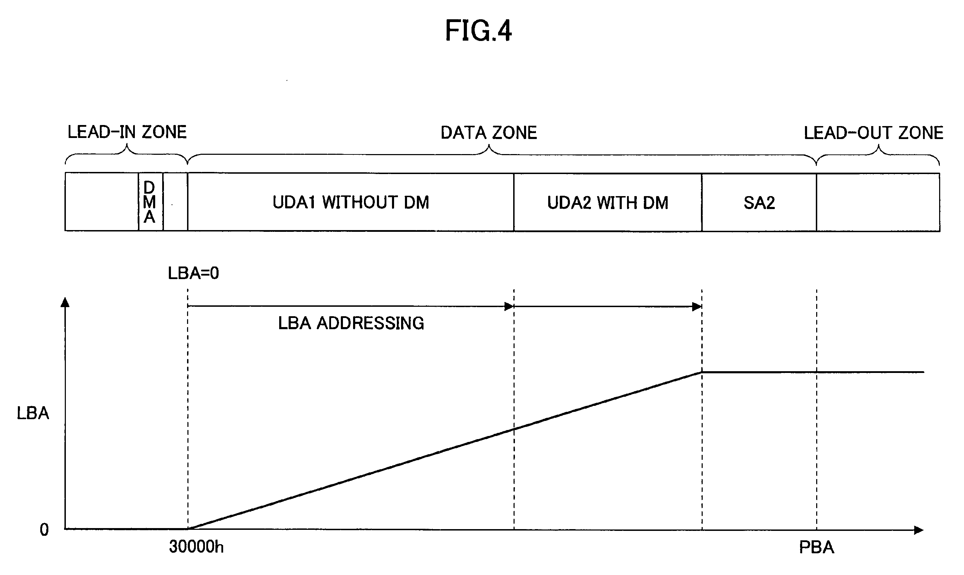

Next, dividing of a data area of the first embodiment is described. The method for dividing the data area and a defect management scheme for each partial area can be specified by the user via the upper apparatus 90. In this embodiment, as an example, as shown in Fig.4, the data area is divided into two partial areas (to be referred to as UDA1 and UDA2 respectively), and it is assumed to be specified that the UDA1 is an area for which defect management is not performed, and the UDA2 is an area for which defect management is performed. Then, it is assumed that the linear replacement is applied for the UDA2 so that defect management for the primary defect and the secondary defect is performed. The UDA2 is placed right after the UDA1. In addition, a replacement area (SA2) of a defect area detected in the UDA2 is placed right after the UDA2. The size of the SA2 is determined according to the size of the UDA2.

The logical address (LBA) is set so as to continuously increase from a start address of the data area to a last address of the UDA2. That is, the logical address continues before and after the border between the UDA1 and the UDA2.

In addition, as a block in which information on each partial area is stored, a defect management information (to be referred to as DMI hereinafter) block is newly defined, so that a defect management information area (to be referred to as "DMA") is provided in the lead-in zone as an area on which the DMI block is recorded.

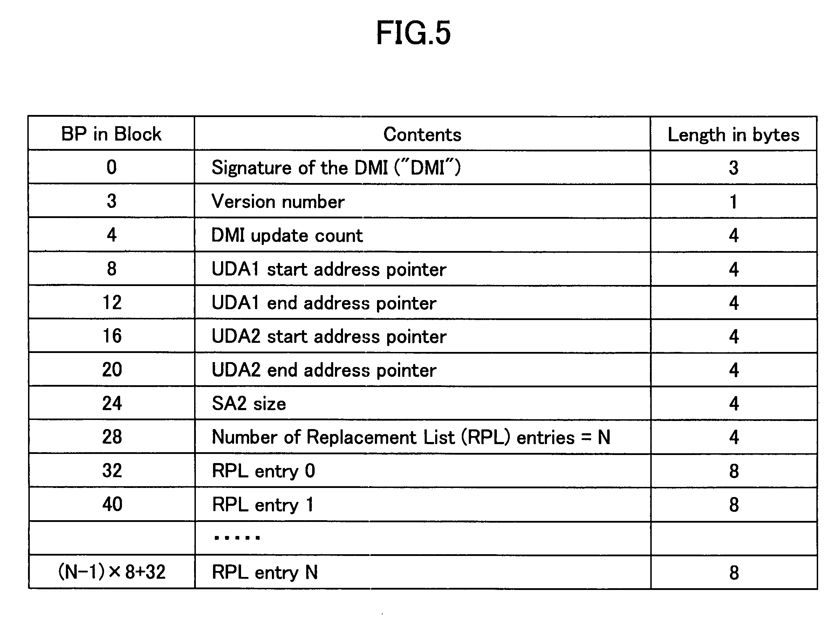

In this first embodiment, information on the UDA1 and the UDA2 are stored in the DMI block. That is, in this embodiment, as shown in Fig.5, the DMI block includes, from the top in sequence, "Signature" of 3 bytes, "Version number" of 1 byte, "DMI update count" of 4 bytes, "UDA1 start address pointer" of 4 bytes, "UDA1 end address pointer" of 4 bytes, "UDA2 start address pointer" of 4 bytes, "UDA2 end address pointer" of 4 bytes, "SA2 size" of 4 bytes, "Number of replacement list (RPL) entries" of 4 bytes, "RPL entry 0" of 8 bytes, "RPL entry 1" of 8 bytes, ...., "RPL entry N" of 8 bytes. By the way, "BP" in Fig.5 indicates a byte pointer which indicates the number of bytes from the top of the DMI block.

As an ID indicating that the block is the DMI block, an ASCII code (444D49h) of the DMI is stored in the "signature". A version number of the DMI block is stored in the "version number". A number of update times of the DMI block is stored in the "DMI update count". A start address of the UDA1 is stored in the "UDA1 start address pointer", and an end address of the UDA1 is stored in the "UDA1 end address pointer". A start address of the UDA2 is stored in the "UDA2 start address pointer", and an end address of the UDA2 is stored in the "UDA2 end address pointer". The size of SA2 is stored in the "SA2 size". The number of replacement lists is stored in the "number of replacement list entries" (to be referred to as "N_RPL" hereinafter). In this embodiment, it is assumed that N replacement lists exist as an example. Each of the "RPL entry 0", "RPL entry 1", ........, "RPL entry N" (to be collectively referred to as "RPL entry" hereinafter) is a replacement list, and each of them stores an address of a defect area and an address of a replacement destination with which the defect area is replaced. In this embodiment, since the UDA1 is an area where defect management is not performed, there is no defect management information corresponding to the UDA1. Therefore, the SA2 size, the N_RPL and the RPL entry are defect management information corresponding to the UDA2.

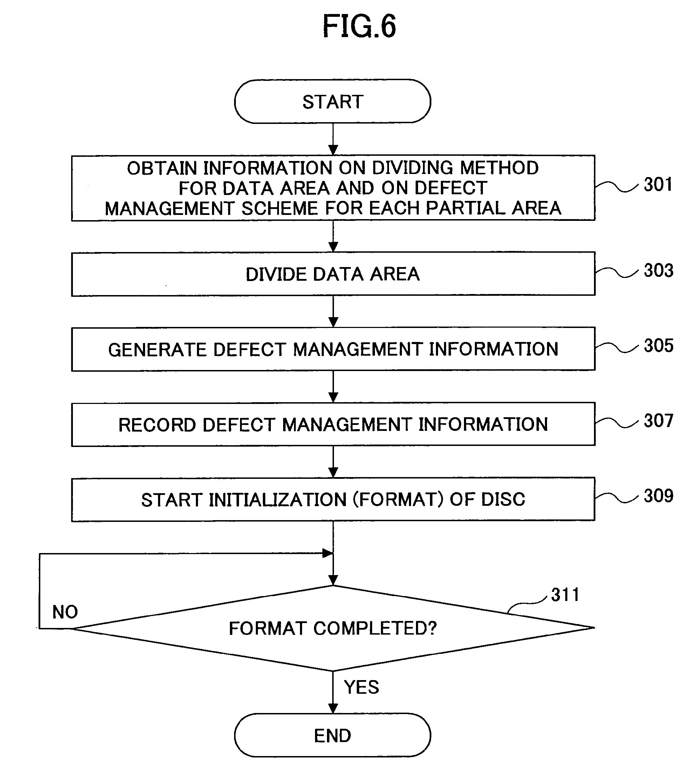

Next, processes when the optical disc apparatus 20 configured as mentioned above receives a command (to be referred to as "format command" hereinafter) for requesting formatting from the upper apparatus 90 are described with reference to Fig.6. The flowchart of Fig.6 corresponds to an algorithm of a series of processes performed by the CPU 40. It is assumed that the optical disc 15 is a blank disc.

When receiving the format command from the upper apparatus 90, a head address of a program (to be referred to as "format program") corresponding to the flowchart of Fig.6 is set to a program counter of the CPU 40 so that the format program is launched.

In the first step 301, the optical disc apparatus 20 obtains, via the upper apparatus 90, information on a method of dividing the data area and a defect management scheme of each partial area that are set by the user. In this embodiment, as an example, as mentioned before, it is assumed that the data area is divided into two partial areas (UDA1, UDA2) in which the UDA1 is an area where defect management is not performed and the UDA2 is an area where the defect management is performed, and linear replacement is allied to the UDA2.

In the next step 303, the data area is divided based on the obtained information. Then, the size of the SA2 is determined according to the size of the UDA2.

In the next step 305, the defect management information is generated for each partial area based on the obtained information. In this step, the before-mentioned DMI block is generated.

In the next step 307, the generated defect management information (DMI block) is recorded on the DMA of the optical disc 15.

In the next step 309, initialization process for the optical disc 15 (format process) is started.

In the next step 311, it is determined whether the format process is completed. When the format process is not completed, decision in this step is denied so that the optical disc apparatus 20 waits until the format process completes. In the format process, process for detecting the primary defect is performed for the UDA2. When the defect is detected, a replacement address is determined and is registered in the replacement list so as to update the replacement list. When the format process completes, decision in this step is affirmed so that the processes performed when receiving the format command end after performing predetermined ending processes.

By the way, the format process may be a so-called background format process in which minimum necessary information is recorded and recording of dummy data is performed when there is no access from the user.

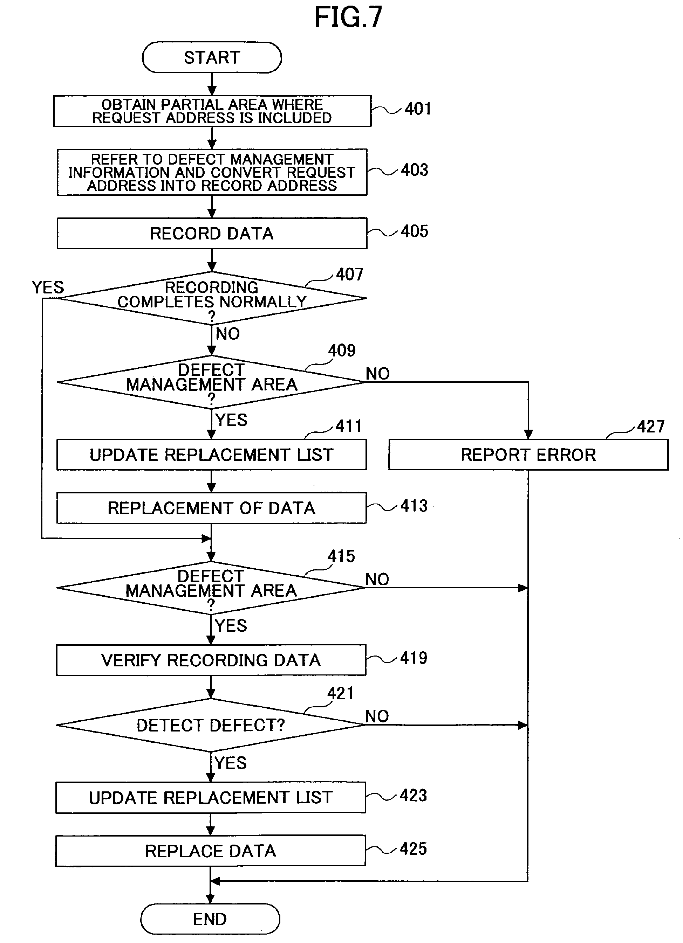

Next, processes performed when receiving, from the upper apparatus 90, a command (to be referred to as "recording request command" hereinafter) for requesting recording are described with reference to Fig.7. The flowchart of Fig.7 corresponds to an algorithm of a series of processes performed by the CPU 40. By the way, it is assumed that the format process has been performed for the optical disc 15.

When receiving the recording request command from the upper apparatus 90, a head address of a program (to be referred to as "a first recording process program") corresponding to the flowchart of Fig.7 is set to a program counter of the CPU 40 so that the first recording process program is launched.

In the first step 401, a partial area (to be also referred to as "target partial area" hereinafter) that includes a request address is obtained. In this step, the UDA1 or the UDA2 becomes the target partial area.

In the next step 403, the defect management information is referred to so that the request address is converted into a recording address.

In this embodiment, when the target partial area is the UDA1, the recording address is obtained as a physical address by adding the UDA1 start address pointer to the request address.

On the other hand, when the target partial area is the UDA2, the request address is converted into a physical address by adding the UDA1 start address pointer to the request address. Then, when the physical address is not registered in the replacement list (RPL entry), the physical address becomes the recording address as it is. When the physical address is registered in the replacement list, the replacement destination address becomes the recording address.

In the next step 405, it is instructed to record data on an area specified by the recording address. Accordingly, data (user data) is recorded on the optical disc 15 via the encoder 25, the laser control circuit 24 and the optical pickup apparatus 23.

In the next step 407, it is determined whether recording of the data completes normally. When the recording of data does not complete normally, decision in this step is denied, so that the step goes to step 409.

In this step 409, it is determined whether the target partial area is an area where the defect management is performed. When the target partial area is the UDA2, since the defect management is performed in the area, the decision in this step is affirmed, so that the step moves to step 411.

In this step 411, a replacement destination address is determined and it is registered in the replacement list so as to update the replacement list. By the way, the logical address previously assigned to the defect area is assigned to a replacement address that is the destination with which the defect area is replaced.

In the next step 413, replacement of data is performed.

In the next step 415, it is determined whether the target partial area is an area where the defect management is performed. When the target partial area is the UDA2, since the defect management is performed in the area, the decision in this step is affirmed, so that the step moves to step 419.

In the next step 419, verify process is performed. For example, an area on which data is recorded is reproduced to obtain an error rate.

In the next step 421, based on the result of the verify process, it is determined whether there is a defect. For example, when the error rate is equal to or greater than a predetermined value, the decision in this step is affirmed, and the step moves to step 423.

In the step 423, a replacement destination address is determined and it is registered in the replacement list so as to update the replacement list.

In the next step 425, replacement of data is performed. Then, the first recording process program ends.

By the way, in the step 415, when the target partial area is the UDA1, since the defect management is not performed in the area, the decision in step 415 is denied, so that the first recording process program ends. In addition, in the step 421, when the defect is not detected, decision in step 421 is denied so that that the first recording process program ends.

In addition, in the step 409, when the target partial area is the UDA1, since the defect management is not performed in the area, the decision in step 409 is denied, and the step goes to step 427. In this step 427, error report to the user is performed via the upper apparatus 90. Then, the first recording process program ends.

In addition, in the step 407, when recording of data is completed normally, an affirmative result is obtained in the judgement of step 407, so that the step goes to the step 415.

Therefore, when the data is recorded on the UDA1, since defect detection and replacement of the defect area are not performed, it can be avoided to lose real-time quality for data recording. In addition, when the data is recorded on the UDA2, since defect detection and replacement of the defect area are performed, it becomes possible to ensure reliability of recording data.

As is clear from the above descriptions, in the optical disc apparatus 20 of the first embodiment, setting means and detection management means are realized by the CPU 40, and the program executed by the CPU 40. That is, the setting means is realized by the steps 303 and 305 in Fig.6, and the defect management means is realized by the steps 407-425 in Fig.7. In addition, recording means is realized by the CPU 40, the program executed by the CPU 40, the optical pickup apparatus 23, the laser control circuit 24 and the encoder 25.

At least a part of each means realized by processes according to the program by the CPU 40 may be configured by hardware, or all of the means may be configured by hardware.

In addition, in the first embodiment, the program of the present invention is configured by the format program and the first recording process program from programs installed in the flash memory 39. That is, a setting procedure is configured by a program corresponding to processes of steps 303 and 305 of Fig.6, a recording procedure is configured by a program corresponding to step 307 of Fig.6, and a procedure for performing defect management is configured by a program corresponding to steps 407-425 in Fig.7.

Then, a setting process in the defect management information setting method of the present invention is performed by processes of steps 303 and 305 of Fig.6, and a recording process is performed by the process of step 307 in Fig.6. In addition, a process for performing defect management in the defect management method of the present invention is performed by processes in the steps 407-425 in Fig.7.

As described above, according to the optical disc apparatus of the first embodiment, when the optical disc apparatus receives the format command for the blank optical disc 15, the optical disc apparatus divides the data area, and sets defect management information for each partial area. Then, by dividing the data area into the area (UDA1) where defect management is not performed and the area (UDA2) where defect management is performed, continuity can be kept for information recorded on the UDA1, and reliability of data can be kept for information recorded on the UDA2. For example, by setting the UDA1 to be the area (to be referred to as AV data area) where AV data is recorded, and setting the UDA2 to be the PC data area, optimal recording can be performed for each data when data such as the AV data and the PC data in which usage and characteristics are different are mixed and recorded on the same disc. Therefore, it becomes possible to properly record a plurality of kinds of data in which usage and characteristics are different with each other on the same information recording medium.

In addition, since the defect management information is recorded on the optical disc 15, it becomes possible to accurately identify the defect management scheme for each partial area when the optical disc 15 is set again, so that continuity of data can be kept for information recorded on the UDA1 and reliability of data can be kept for information recorded on the UDA2. In addition, even when different optical disc apparatuses are used, compatibility can be maintained.

In addition, the user can arbitrarily set a method for dividing the data area and a defect management scheme for each partial area, defect management can be realized according to usage of the user.

In the first embodiment, since the UDA1 end address pointer and the UDA2 start address pointer continue, irrespective whether the target partial area is the UDA1 or the UDA2, the physical address can be obtained by adding the UDA1 start address pointer to the request address. Therefore, it becomes possible to change a logical address to a physical address easily. By the way, if the UDA1 end address pointer and the UDA2 start address pointer are discontinuous, it is necessary to obtain the physical address in consideration of the size of the discontinuity when the target partial area is the UDA2.

In addition, since the logical address continues before and after the border between the UDA1 and the UDA2, continuity of logical address is ensured between partial areas so that the user can specify a partial area by the logical address.

In addition, since there is no replacement area corresponding to the UDA1 where defect management is not performed, the data area can be efficiently used.

In addition, when the optical disc 15 is initialized, the method for dividing the data area and the defect management scheme for each partial area are set, it becomes easy to perform defect management for data recording after that.

In the first embodiment, although a case where the replacement area of the UDA2 is placed right after the UDA2 is described, the placement is not limited to this.

### (Modified example)

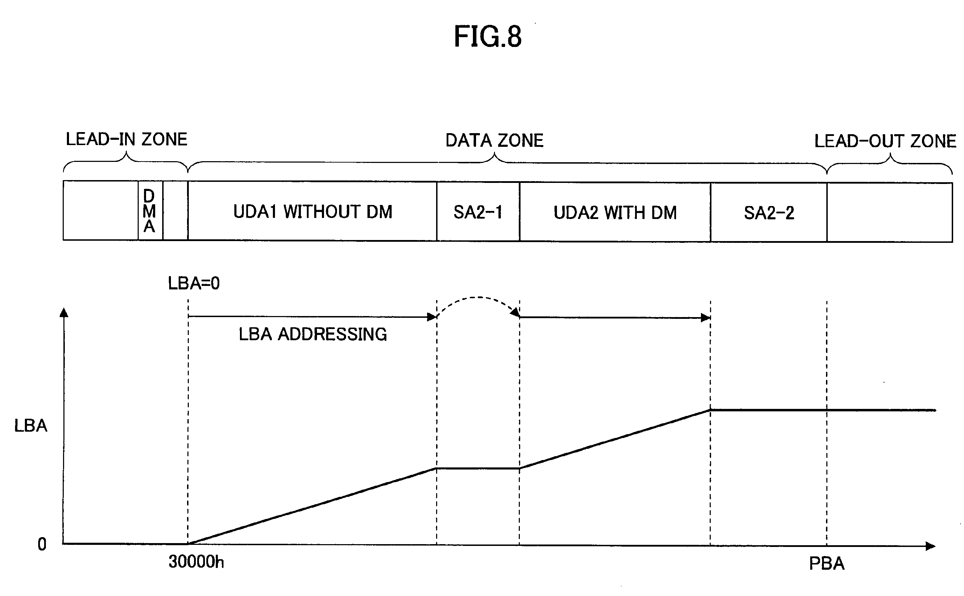

A modified example of the first embodiment is described with reference to Figs.8-10. As shown in Fig.8 as an example, in this modified example, the SA2 of the first embodiment is divided into two (SA2-1 and SA2-2) in which SA2-1 is placed in front of the UDA2 and SA2-2 is placed at the back of the UDA2. That is, this example is different from the first embodiment in that the SA2 that is the replacement area of the UDA2 is divided and the divided portions are placed before and after the UDA2.

As shown in Fig.8, the SA2-1 is placed between the UDA1 and the UDA2 in which the logical address (LBA) is set so as to continuously increase from the start address of the data area in the UDA1 and the UDA2. Therefore, the logical address skips at the SA2-1.

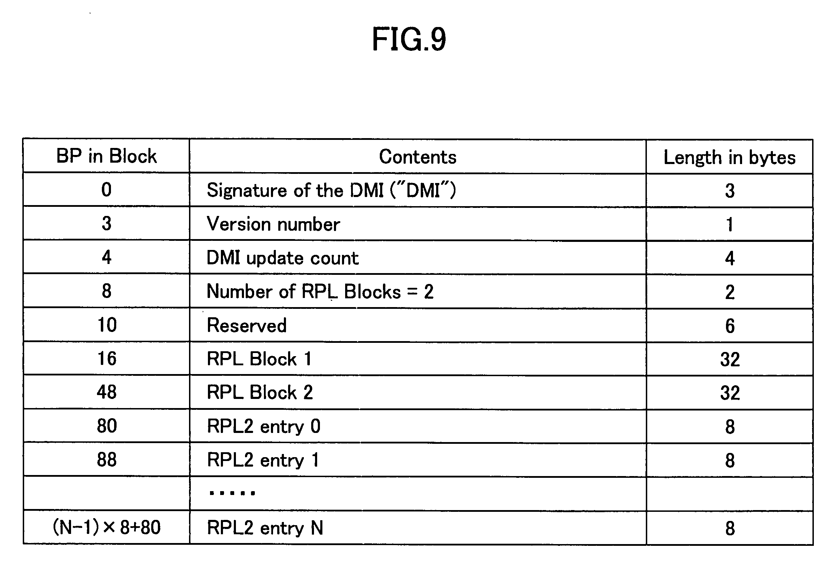

In this case, as shown in Fig.9, the DMI block is composed of, from the head in order, "Signature" of 3 bytes, "Version number" of 1 byte, "DMI update count" of 4 bytes, "Number of RPL Blocks" of 2 bytes, "Reserved" of six bytes, "RPL Block 1" of 32 bytes, "RPL Block 2" of 32 bytes, "RPL2 entry 0" of 8 bytes, "RPL2 entry 1" of 8 bytes, ·······, "RPL2 entry N" of 8 bytes.

In the "Signature", an ASCII code (444D49h) of DMI is stored as an ID indicating that the block is the DMI block. In the "Version number", a version number of the DMI block is stored. In the "DMI update count", a number of times the DMI block has been updated is stored. In the "Number of RPL Blocks", a number of RPL blocks is stored. The RPL block is a block newly defined in this example and stores address information of the partial area and information on the defect management scheme. Therefore, the number of existing RPL blocks is the same as the number of the partial areas. In this example, since two partial areas (UDA1, UDA2) exist, there are two RPL blocks. Therefore, "02h" is stored in the "Number of RPL Blocks". By the way, a detailed format of the RPL block is described later. The "Reserved" is an area that is reserved for the future, and stores "00h". In the "RPL Block 1", the RPL block corresponding to the UDA1 is stored. In the "RPL Block 2", the RPL block corresponding to the UDA2 is stored. Each of the "RPL2 entry 0", "RPL2 entry 1", ·······, "RPL2 entry N" (to be collectively referred to as "RPL2 entry") is a replacement list of the UDA2, and stores an address of a defect area and an address of a replacement destination with which the defect area is replaced. By the way, since the UDA1 is an area where defect management is not performed, the RPL1 entry that is the replacement list of the UDA1 does not exist. In addition, the storing position of the replacement list changes according to the number of the partial areas and the size of the replacement area.

The RPL block is described in the following.

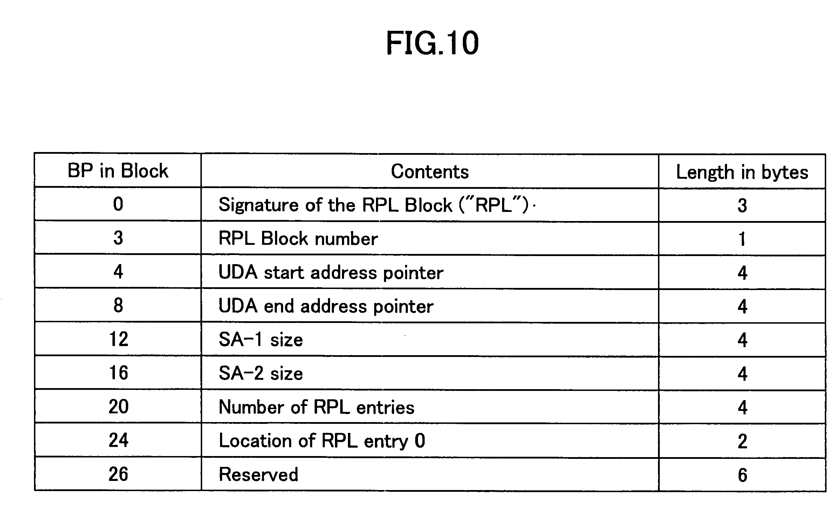

The RPL block is a block of 32 bytes, and, as shown in Fig.10, information of the partial area is stored with a common format. The RPL block is composed of, from the head in order, "Signature" of 3 bytes, "RPL Block number" of 1 byte, "UDA start Address pointer" of 4 bytes, "UDA end Address pointer" of 4 bytes, "SA-1 size" of 4 bytes, "SA-2 size" of 4 bytes, "Number of RPL entries" of 4 bytes, "Location of RPL entry 0" of 2 bytes, and "Reserved" of 6 bytes.

In the "signature", an ASCII code (52504Ch) of the RPL is stored as an ID indicating that the block is the RPL block. In the "RPL Block number", a number of the RPL block is stored. The "RPL Block number" is the same as the UDA number and indicates which partial area corresponds to the RPL block. In the "UDA start Address pointer", a start address of a corresponding partial area is stored. In the "UDA end Address pointer", an end address of a corresponding partial area is stored. In the "SA-1 size", a size of the SA-1 is stored, and in the "SA-2 size", a size of the SA-2 is stored. The size of the SA-1 and the size of the SA-2 are determined according to the size of the corresponding partial area. In the "Number of RPL entries", a number (N_RPL) of the replacement lists is stored. In the "Location of RPL entry 0" (to be referred to as "RPL position information" hereinafter), position information of the first RPL entry of the RPL entries that are the replacement lists of the corresponding partial area is stored as an offset value (byte position) from the head of the DMI block. Therefore, a start position of the replacement list of each partial area can be specified from the RPL position information in the RPL block. The "reserved" is an area reserved for the future, and stores "00h".

In this example, since the UDA1 is an area where defect management is not performed, the SA-1 (SA1-1 in this example) and SA-2 (SA1-2 in this example) do not exist. Thus, as to the RPL block corresponding to the UDA1, "0" is stored in each of the SA-1 size, the SA-2 size, the N_RPL, and the RPL position information.

On the other hand, the UDA2 is an area where defect management is performed in which SA-1 (SA2-1 in this example) and SA-2 (SA2-2 in this example) exist. Therefore, the RPL block corresponding to the UDA2 stores predetermined values in SA-1 size, SA-2 size, N_RPL, and RPL position information. In this embodiment, N replacement lists exists. That is, N_RPL=N holds true. In addition, since the replacement list of the UDA2 starts from eightieth byte of the DMI block, "80" is stored as the RPL position information. Like the first embodiment for example, when there is no replacement area in front of the UDA2, "0" is stored as the SA-1 size.

In this modified example, when receiving the format command from the upper apparatus 90, the format program is launched. In step 303, sizes of SA2-1 and SA2-2 are determined according to the size of the UDA2.

In addition, in this modified embodiment, when receiving the recording request command from the upper apparatus 90, the first recording program is launched. In the step 403, when the target partial area is the UDA2, the physical address is obtained in consideration that the logical address is skipped at the SA2-1.

In addition, in the steps 411 and 423, a replacement area nearer to the defect area is selected from SA2-1 and SA2-2 so as to determine the replacement destination address and register it in the replacement list to update the replacement list.

As described above, according to this modified example, since the SA2-1 is placed in front of the UDA2 and the SA2-2 is placed at the back of the UDA2 as the replacement area with which the defect in the UDA2 is replaced, a replacement area, between the SA2-1 and the SA2-2, nearer to a defect detected in the UDA2 can be used. Accordingly, seek distance can be shortened so that access time for replacement process can be further shortened.

In addition, since the area (RPL block) for storing the defect management information of the UDA1 is provided, defect management can be also performed in the UDA1 according to usage of the user, so that the format of this modified example is more general than that of the first embodiment.

In addition, although the replacement area SA2-1 exists between the UDA1 and the UDA2, since the logical address continues in the UDA1 and the UDA2, continuity of the logical address between partial areas is ensured, so that the user can specify a partial area by the logical address.

In addition, in the modified example, although the replacement list is stored in the DMI block, the replacement list may be stored in an area other than the DMI block.

### (Second embodiment)

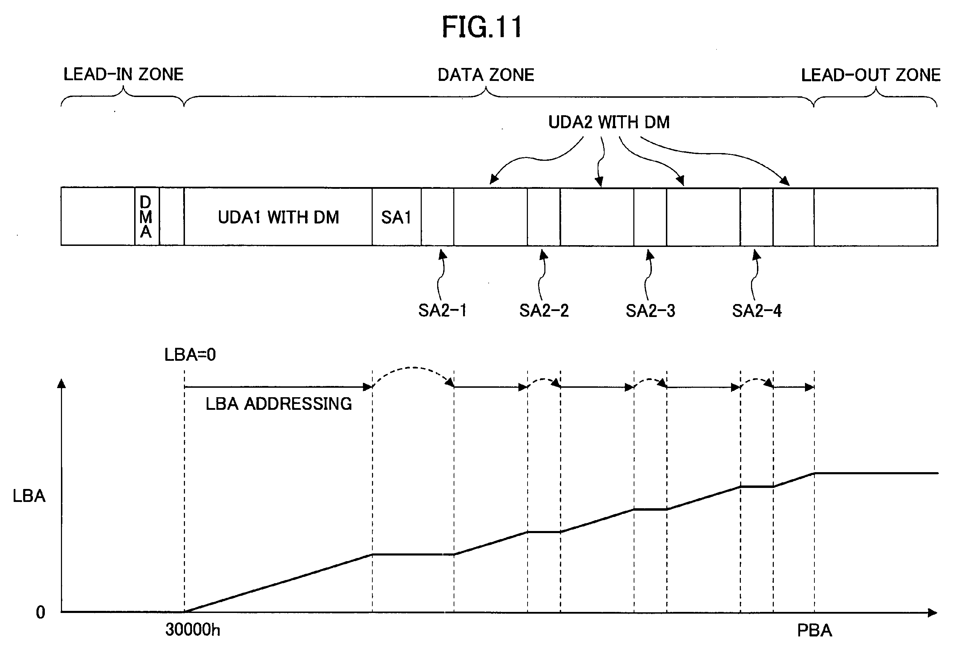

Next, the second embodiment of the present invention is described with reference to Figs.11-13. As shown in Fig.11, the second embodiment is different from the first embodiment in that defect management is performed in both of the UDA1 and the UDA2. In addition, the replacement area SA1 is placed at the back of the UDA1, and a plurality of replacement areas SA2 (SA2-1 - SA2-4 in this embodiment) are distributed in the UDA2. Therefore, a part of the program stored in the flash memory 39 is different from that of the first embodiment, but configurations of the optical apparatus and the like are the same as that of the first embodiment. Therefore, in the following, points that are different from the first embodiment are mainly described, and the same reference signs are used for configuration parts the same as or similar to those of the first embodiment and the description is simplified or is not given.

As shown in Fig.11, the logical address (LBA) is set so as to continuously increase from the start address of the data area in the UDA1 and the UDA2. Therefore, the logical address is skipped in SA1, SA2-1, SA2-2, SA2-3 and SA2-4.

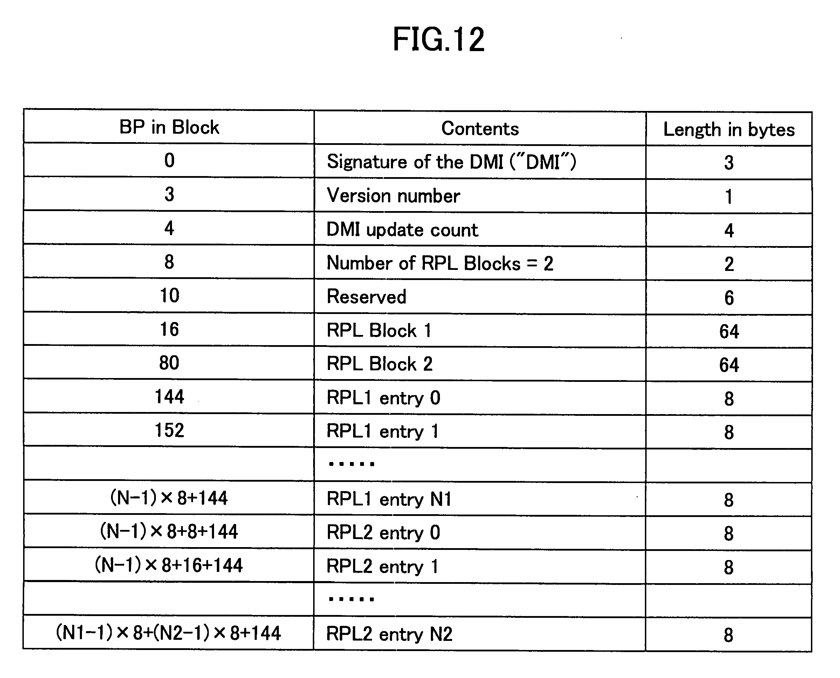

In this case, as shown in Fig.12 as an example, the DMI block is composed of, from the head in order, "Signature" of 3 bytes, "Version number" of 1 byte, "DMI update count" of 4 bytes, "Number of RPL Blocks" of 2 bytes, "Reserved" of 6 bytes, "RPL Block 1" of 64 bytes, "RPL Block 2" of 64 bytes, "RPL1 entry 0" of 8 bytes, "RPL1 entry 1" of 8 bytes, ······· "RPL1 entry N1" of 8 bytes, "RPL2 entry 0" of 8 bytes, "RPL2 entry 1" of 8 bytes, ······ "RPL2 entry N2" of 8 bytes. That is, the replacement list is stored next to the RPL block in the DMI block.

In the "Signature", an ASCII code (444D49h) of DMI is stored as an ID indicating that the block is the DMI block. In the "Version number", the version number of the DMI block is stored. In the "DMI update count", a number of times the DMI block has been updated is stored. In the "Number of RPL Blocks", a number of RPL blocks each storing address information of partial area and information on defect management scheme is stored. The RPL block in the second embodiment has a data structure different from that of the block defined in the modified example. The number of the RPL blocks is the same as the number of the partial areas. In this embodiment, since two partial areas (UDA1, UDA2) exist, there are two RPL blocks. Therefore, "02h" is stored in the "Number of RPL Blocks". A detailed format of the RPL block is described later. The "Reserved" is an area reserved for the future, and "00h" is stored. In the "RPL Block 1", a RPL block corresponding to the UDA1 is stored. In the "RPL Block 2", a RPL block corresponding to the UDA2 is stored. Each of the "RPL1 entry 0", "RPL1 entry 1",······· "RPL1 entry N1" (to be collectively referred to as "RPL1 entry" hereinafter) is a replacement list of the UDA1, and stores an address of a defect area and an address of a replacement destination with which defect area is replaced. Each of the "RPL2 entry 0", "RPL2 entry 1", ······· "RPL2 entry N2" (to be collectively referred to as "RPL2 entry" hereinafter) is a replacement list of the UDA2, and stores an address of a defect area and an address of a replacement destination with which defect area is replaced. By the way, the position of the replacement list varies according to the number of partial areas and the size of the replacement area.

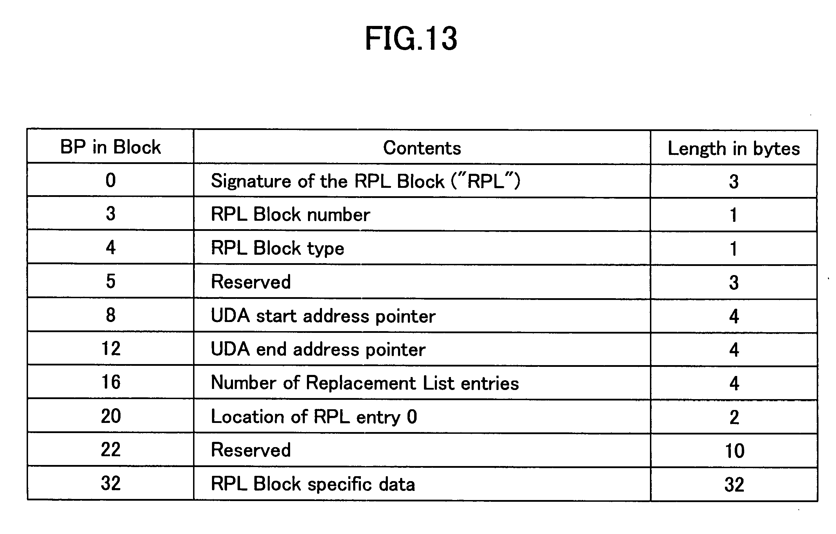

In the following, the RPL block is described. As shown in Fig.13, the RPL block is a block of 64 bytes, and is composed of a part (BP=0 - 31) where data is recorded with a common format and a part (BP= 32 - 63) where data is recorded with a format that is different for each after-mentioned RPL identifier. The RPL block is composed of, from the head in order, "Signature" of 3 bytes, "RPL Block number" of 1 byte, "RPL Block type" (RPL identifier) of 1 byte, "Reserved" of 3 bytes, "UDA start Address pointer" of 4 bytes, "UDA end Address pointer" of 4 bytes, "Number of Replacement List(RPL) entries" of 4 bytes, "Location of RPL entry 0" of 2 bytes, "Reserved" of 10 bytes, and "RPL Block specific data" of 32 bytes.

In the "Signature", an ASCII code (52504Ch) of RPL is stored as an ID indicating that the block is the RPL block. In the "RPL Block number", the number of the RPL block is stored. The PL Block number is the same as the UDA number, and indicates which partial area corresponds to the RPL block. In the RPL identifier, the type of the RPL block is stored. In the "UDA start Address pointer", a start address of the corresponding partial area is stored. In the "UDA end Address pointer", an end address of the corresponding partial area is stored. In the "Number of Replacement List(RPL) entries", the number (N_RPL) of the replacement lists is stored. The "Location of RPL entry 0" (RPL position information) stores position information of a first RPL entry of RPL entries that is a replacement list of a corresponding partial area as an offset value (byte position) from the head of the DMI block. Therefore, the start position of the replacement list of each partial area can be specified based on the RPL position information in the RPL block. Each "Reserved" is an area reserved for the future, and stores "00h". In the "RPL Block specific data", detailed information of a defect management scheme that is applied to a partial area indicated by the RPL block is stored in a format defined for each RPL identifier. The "RPL Block specific data" stores, as examples, presence or absence of defect management (including presence or absence of each defect (primary defect, secondary defect)), replacement scheme (linear replacement, slip replacement, etc.), placement of the replacement area, presence or absence of verify (including information on verified area), replacement condition (including defect determination criteria), format of replacement list, and the like.

In this embodiment, it is assumed that the linear replacement is applied for the UDA1 where defect management is performed only for primary defect, and that the linear replacement is applied for the UDA2 where defect management is performed for primary defect and secondary defect. These pieces of information are stored in the RPL block when generating the defect management information.

When receiving the format command from the upper apparatus 90, a format program, the same as that of the first embodiment is launched. But, in the step 303, the size of the SA1 is determined according to the size of the UDA1 and the defect management scheme, and the sizes of SA2-1 - SA2-4 are determined according to the size of the UDA2 and the defect management scheme. In this embodiment, since only the primary defect is managed in the UDA1, the size of the SA1 is smaller than the case where the secondary defect is managed in addition to the primary defect.

In addition, in the format processing, as to the UDA1, detection process for the primary defect is performed based on the RPL block specific data stored in the RPL block 1. When the defect is detected, a replacement destination address is determined and is stored in the replacement list so as to update the replacement list. As to the UDA2, detection process for the primary defect is performed based on the RPL block specific data stored in the RPL block 2. When the defect is detected, a replacement destination address is determined and is stored in the replacement list so as to update the replacement list.

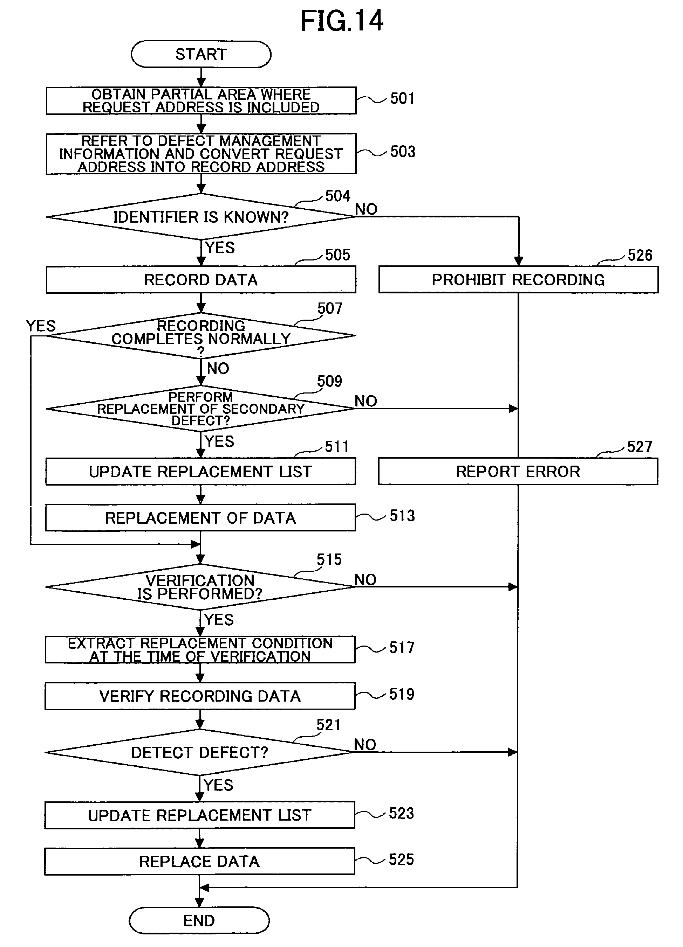

Next, processes performed when receiving the recording request command from the upper apparatus 90 are described with reference to Fig.14. The flowchart of Fig.14 corresponds to an algorithm of a series of processes performed by the CPU 40. By the way, it is assumed that the format process has been performed for the optical disc 15.

When receiving the recording request command from the upper apparatus 90, a head address of a program (to be referred to as "a second recording process program") corresponding to the flowchart of Fig.14 is set to a program counter of the CPU 40 so that the second recording process program is launched.

In steps 501 - 503, processes similar to processes in the steps 401 - 403 are performed. However, in step 503, when the target partial area is the UDA2, the physical address is obtained in consideration that the logical address is skipped in the replacement area.

In the next step 504, it is determined whether the RPL identifier is known by referring to the defect management information. When the RPL identifier is known, the decision in this step is affirmed and the step goes to step 505.

In the next step 505, it is instructed to record data on an area specified by the recording address. In the next step 507, it is determined whether recording of the data completes normally. When the recording of data does not complete normally, decision in this step is denied, so that the step moves to step 509.

In this step 509, it is determined whether the target partial area is an area where the replacement process is performed for the secondary defect by referring to the defect management information. When the target partial area is the UDA2, since the replacement process is performed in the area for the secondary defect, the decision in this step is affirmed, so that the step goes to step 511.

In this step 511, since the target partial area is the UDA2, a replacement area that is the nearest to the defect area is selected from the SA2-1 - SA2-4, and a replacement destination address is determined and it is registered in the replacement list so as to update the replacement list. By the way, the logical address previously assigned to the defect area is assigned to a replacement address that is the destination with which the defect area is replaced.

In the next step 513, replacement of data is performed.

In the next step 515, it is determined whether the target partial area is an area where verify process is performed after data recording. When the target partial area is the UDA2, since the verify process is performed in the area, the decision in this step is affirmed, so that the step goes to step 517.

In this step 517, replacement condition etc. in the verify process is extracted from the defect management information. In this step, for example, it is also determined whether to use the error rate or to use PI byte or PO byte of the ECC block as a defect determination criteria.

In the next step 519, verify process is performed.

In the next step 521, based on the determination criteria included in the "RPL block specific data" stored in the RPL block 2, it is determined whether there is a defect. For example, in the case when the error rate is used for determining a defect, when the error rate is equal to or greater than a predetermined value, the decision in this step is affirmed, and the step moves to step 523.

In the step 523, since the target partial area is the UDA2, a replacement area that is the nearest to the defect area is selected from the SA2-1 - SA2-4, and a replacement destination address is determined and it is registered in the replacement list so as to update the replacement list.

In the next step 525, replacement of data is performed. Then, the first recording process program ends.

By the way, in the step 515, when the target partial area is the UDA1, since the verify process is not performed in the area, the result of decision in step 515 is denied, so that the second recording process program ends. In addition, in the step 521, when any defect is not detected, the decision in the step 521 is denied, so that the second recording process program ends.

In addition, in the step 509 when the target partial area is the UDA1, since replacement process for the second defect is not performed in the area, the decision in the step 509 is denied, so that the step goes to the step 527. In the step 527, error report to the user is performed via the upper apparatus 90. Then, the second recording process program ends.

In addition, in the step 507, when recording of data is completed normally, the decision in the step 507 is affirmed, so that the step goes to the step 515.

In addition, in the step 504, when the RPL identifier is not known, the decision in the step is denied so that the step goes to step 526. In this step 526, data recording is prohibited. Then the step goes to step 527.

As is clear from the above descriptions, in the optical disc apparatus 20 of the second embodiment, setting means and detection management means are realized by the CPU 40, and by the program executed by the CPU 40. That is, the setting means is realized by the steps 303 and 305 in Fig.6, and the defect management means is realized by the steps 507-525 in Fig.14. In addition, recording means is realized by the CPU 40, the program executed by the CPU 40, the optical pickup apparatus 23, the laser control circuit 24 and the encoder 25.

At least a part of each means realized by processes according to the program by the CPU 40 may be configured by hardware, or all of the means may be configured by hardware.

In addition, in the second embodiment, the program of the present invention is configured by the format program and the second recording process program from programs installed in the flash memory 39. That is, a setting procedure is configured by a program corresponding to processes of steps 303 and 305 of Fig.6, a recording procedure is configured by a program corresponding to the step 307 of Fig.6, a procedure for determination is configured by a program corresponding to the step 504 of Fig.14, a procedure for allowing record is configured by a program corresponding to the step 505 of Fig.14, and a procedure for performing defect management is configured by a program corresponding to steps 507-525 in Fig.14.

Then, a setting process in the defect management information setting method of the present invention is performed by processes of steps 303 and 305 of Fig.6, and a recording process is performed by the process of step 307 in Fig.6. In addition, a process for performing defect management in the defect management method of the present invention is performed by processes in the steps 507-525 in Fig.14.

In addition, a process for determination in the recording method of the present invention is configured by a process corresponding to the step 504 of Fig.14, and a process for allowing record is configured by a process corresponding to the step 505 of Fig.14.

As described above, according to the optical disc apparatus of the second embodiment, since RPL blocks are provided for the UDA1 and the UDA2 respectively, it becomes possible to apply different defect management schemes for the UDA1 and the UDA2 so as to be able to perform defect management applicable for each partial area. That is, since independent defect management information is provided for each of the partial areas, more complicated defect management can be performed. For example, by setting the UDA1 to be the AV data area, and by setting the UDA2 to be the PC data area, optimal recording can be performed for each data when data such as the AV data and the PC data in which usage and characteristics are different are mixed and recorded on the same disc. Therefore, it becomes possible to properly record a plurality of kinds of data in which usage and characteristics are different with each other on the same information recording medium.

In addition, since the size of the replacement area can be determined according to the defect management scheme, it can be avoided that a useless area is produced.

In addition, since the defect management information includes an identifier for identifying data structure of the defect management information, optimal information can be stored for each defect management scheme. Therefore, a partial area where simple defect management is performed and a partial area where complicated defect management is performed can be mixed.

In addition, each of the plurality of partial area has an independent defect determination criteria, defect detection applicable for each partial area can be performed.

In addition, since a plurality of replacement areas (SA2-1 - SA2-4 in this example) are placed in the UDA2 in a distributed manner, a replacement area nearer to the defect area than the modified example can be used, so that access time in the replacement process can be further shortened.

In addition, the replacement area SA1 exists between the UDA1 and the UDA2, and a plurality of replacement areas SA2 exist in the UDA2. But, since the logical address continues in the UDA1 and the UDA2, continuity of the logical address between partial areas is ensured so that the user can specify a partial area using a logical address.

That is, since each partial area independently has a replacement area, placement of replacement areas suitable for each defect management scheme can be performed. For example, when data such as the AV data and the PC data whose usage and characteristics are different are mixed and recorded on the same disc, it can be avoided to waste a replacement area in the AV data area, and it becomes possible to bringing replacement areas as close as possible to each other for the PC data area.

In addition, since the defect management information for each partial area is recorded on the optical disc, even when the optical disc is inserted into another optical disc apparatus, the defect management scheme for each partial area can be correctly recognized so that compatibility can be maintained. In addition, even when a logical address starts from a midstream of the data area, since a start address of the UDA1 is stored, this case can be easily addressed.

In addition, before recording data, it is determined whether the RPL identifier (identifier) is known, and recording is permitted when the RPL identifier is known. Thus, defect management can be properly performed based on the defect management information. Therefore, as a result, a plurality of kinds of pieces of data whose usage and characteristics are different with each other can be properly recorded on the same information recording medium.

By the way, in the second embodiment, the size of the replacement list can be variable for each RPL identifier.

In addition, for example, by setting the UDA1 to be the AV data area and replacing the primary defect using the slip replacement beforehand when initializing the disc, it becomes possible to avoid using the primary defect in the UDA1. In this case, an area with which an expected primary defect can be replaced is enough for the size of the replacement area. Then, by setting the UDA1 not to perform the secondary replacement, it becomes possible that defect detection is not performed while the AV data is recoded so that real-time operation in data recording can be ensured. On the other hand, by setting the UDA2 to be the PC data area and setting to perform replacement of secondary defect by the liner replacement, reliability of recording data can be ensured.

By the way, in each above embodiment, although cases where the data area is divided into two partial areas are described, the dividing method is not limited to this and the data area can be divided into partial areas more than two.

In addition, in each embodiment, although cases where the replacement list is stored in the DMI list, the storing method is not limited to this, and the replacement list may be stored in an area other than the DMI block.

In addition, in each embodiment, although the program of the present invention is stored in the flash memory 39, the program may be stored in another recording medium (CD, optical magnetic disc, DVD, memory card, USB memory, flexible disc and the like). In this case, the program of the present invention is loaded onto the flash memory 39 via a reproducing apparatus (or specific interface) corresponding to each recording medium. In addition, the program of the present invention may be transferred to the flash memory 39 via a network (LAN, intranet, the Internet, and the like). After all, it is only necessary that the program of the present invention can be loaded onto the flash memory 39.

In addition, in each of the above-mentioned embodiments, although cases where the optical disc is the DVD+RW is described, the present invention is not limited to this, and the optical disc may be other DVD, CD, or a next generation information recording medium supporting light of wavelength of about 405 nm. By the way, in this case, the optical disc apparatus that is used corresponds to the kind of the information recording medium.

In addition, in each of the above-mentioned embodiments, although cases where the optical pickup apparatus has one semiconductor laser are described, the present invention is not limited to this, and for example, the optical pickup apparatus may have a plurality of semiconductor lasers emitting light fluxes of wavelengths different with each other. In this case, for example, the optical pickup apparatus may include at least one of a semiconductor laser emitting a light flux of wavelength of about 405 nm, a semiconductor laser emitting a light flux of wavelength of about 660 nm and a semiconductor laser emitting a light flux of wavelength of about 780 nm. That is, the optical disc apparatus may be an optical disc apparatus supporting a plurality of kinds of optical discs complying with different standards.

In addition, in each of the above-mentioned embodiments, although cases where the information recording medium is the optical disc is described, the present invention is not limited to this. In this case, an information recording apparatus corresponding to the information recording medium is used instead of the optical disc apparatus.

## Claims

1. A defect management information setting method for setting defect management information for managing a defect area in a data area of an information recording medium, comprising:
a step of dividing the data area into a plurality of partial areas such that logical addresses continue and setting defect management information for each partial area.

2. The defect management information setting method as claimed in claim 1, wherein the defect management information includes information on determination criteria for detecting a defect area, and the determination criteria is independently set for each of at least two areas in the plurality of partial areas.

3. The defect management information setting method as claimed in claim 1 or 2, wherein the plurality of partial areas include a partial area where defect management is not performed.

4. The defect management information setting method as claimed in claim 3, wherein the information recording medium is a disc-like medium, and the partial area where the defect management is not performed is provided in an inner periphery side of a partial area where defect management is performed.

5. The defect management information setting method as claimed in claim 1 or 2, wherein the defect management information includes information on a replacement area of the defect area, and
the replacement area is set for each partial area.

6. The defect management information setting method as claimed in claim 3, wherein the defect management information includes information on a replacement area of the defect area, and
the replacement area is set for each of partial areas of the plurality of partial areas excluding a partial area where the defect management is not performed.

7. The defect management information setting method as claimed in claim 5, wherein the replacement area is provided between two partial area, and the logical addresses continue between a partial area right before the replacement area and a partial area right after the replacement area.

8. The defect management information setting method as claimed in claim 5, wherein, in at least one partial area of the plurality of partial areas, a corresponding replacement area is provided adjacent to the at least one of the partial area.

9. The defect management information setting method as claimed in claim 5, wherein, in at least one partial area of the plurality of partial areas, corresponding replacement areas are provided in the at least one partial area in a distributed manner.

10. The defect management information setting method as claimed in claim 1, wherein the step of setting the defect management information is performed when initializing the information recording medium.

11. The defect management information setting method as claimed in claim 1, wherein a method for dividing the data area and a defect management scheme for each partial area are set by a user.

12. The defect management information setting method as claimed in claim 1, further comprising a step of recording the defect management information on a predetermined area of the information recording medium.

13. The defect management information setting method as claimed in claim 1, wherein the defect management information includes an identifier for identifying a data structure of the defect management information.

14. A recording method for recording data on a data area of an information recording medium, comprising:
a step of determining, based on the defect management information set by the defect management information setting method claimed in claim 13, whether an identifier included in the defect management information corresponding to a partial area to which an area where the data is to be recorded belongs is known; and
a step of permitting data recording when the identifier is known as a result of the determination.

15. A defect management method for managing a defect area in a data area of an information recording medium, comprising:
performing defect management of a recording area where data is recorded based on information on the recording area and defect management information that is set by the defect management information setting method as claimed in claim 1.

16. A program used in an information recording apparatus for recording data on an information recording medium, the program causing a control computer for the information recording medium to execute:
a step of dividing a data area into a plurality of partial areas such that logical addresses continue and setting defect management information for each partial area.

17. The program as claimed in claim 16, the program further causing the control computer to execute a step of recording the defect management information on a predetermined area of the information recording medium.

18. The program as claimed in claim 16 or 17, wherein the defect management information includes an identifier for identifying a data structure of the defect management information, and the program further causes the control computer to execute:
a step of determining, based on the defect management information set by the step of setting, whether the identifier corresponding to a partial area to which an area where the data is to be recorded belongs is known; and
a step of permitting data recording when the identifier is known as a result of the determination.

19. The program as claimed in claim 16, the program further causing the control computer to execute:
a step of performing defect management of a recording area where data is recorded based on defect management information that is set by the step of setting and information on the recording area.

20. A computer readable recording medium recording the program as claimed in claim 16.

21. An information recording apparatus for recording data on an information recording medium, comprising:
setting means for dividing a data area of the information recording medium into a plurality of partial areas such that logical addresses continue and setting defect management information for each partial area;
recording means for recording data on the data area; and
defect management means for performing defect management for a recording area where the data is recorded based on information on the recording area and the defect management information.

22. The information recording apparatus as claimed in claim 21, wherein the defect management information includes information on determination criteria for detecting a defect area, and the setting means set the determination criteria independently for each of at least two areas in the plurality of partial areas.

23. The information recording apparatus as claimed in claim 21 or 22, wherein the plurality of partial areas include a partial area where defect management is not performed.

24. The information recording apparatus as claimed in claim 23, wherein the information recording medium is a disc-like medium, and the partial area where the defect management is not performed is provided in an inner periphery side of a partial area where defect management is performed.

25. The information recording apparatus as claimed in claim 21 or 22, wherein the defect management information includes information on a replacement area of the defect area, and
the setting means sets the replacement area for each partial area.

26. The information recording apparatus as claimed in claim 23, wherein the defect management information includes information on a replacement area of the defect area, and
the setting means sets the replacement area for each of partial areas of the plurality of partial areas excluding a partial area where the defect management is not performed.

27. The information recording apparatus as claimed in claim 25, wherein the replacement area is provided between two partial area, and the logical addresses continue between a partial area right before the replacement area and a partial area right after the replacement area.

28. The information recording apparatus as claimed in claim 25, wherein, in at least one partial area of the plurality of partial areas, a corresponding replacement area is provided adjacent to the at least one of the partial area.

29. The information recording apparatus as claimed in claim 25, wherein, in at least one partial area of the plurality of partial areas, corresponding replacement areas are provided in the at least one partial area in a distributed manner.

30. The information recording apparatus as claimed in claim 21, wherein the setting means sets the defect management information when initializing the information recording medium.

31. The information recording apparatus as claimed in claim 21, wherein a method for dividing the data area and a defect management scheme for each partial area can be set by a user.

32. The information recording apparatus as claimed in claim 21, wherein the recording means records the defect management information on a predetermined area of the information recording medium.

33. The information recording apparatus as claimed in claim 21, wherein the defect management information includes an identifier for identifying a data structure of the defect management information.

34. The information recording apparatus as claimed in claim 33, wherein the recording means records the data when an identifier included in the defect management information corresponding to a partial area to which an area where the data is to be recorded belongs is known.
